# EUROPÄISCHE PATENTANMELDUNG

(11) **EP 2 963 187 A1**
(43) Veröffentlichungstag der Anmeldung: **06.01.2016**
(21) Anmeldenummer: 15000966.0
(22) Anmeldetag: 02.04.2015
(51) Int. Cl.: E02D 29/077, E21D 9/00, E21D 11/38, E21B 7/20

(54) **VERFAHREN ZUM DICHTEN VON FUGEN BEIM PRESSROHRVORTRIEB**

(30) Priorität: 07.04.2014 CH 539142014
(71) Anmelder: Trümpi, Stefan, 8762 Schwändi (CH)
(72) Erfinder: Trümpi, Stefan, 8762 Schwändi (CH)
(74) Vertreter: Spillmann, Hannes

(57) **Zusammenfassung**

Verfahren zum Dichten von Fugen beim Pressrohrvortrieb, wobei zwischen einer Stirnseite eines ersten Rohres und einer Stirnseite eines darauf folgenden zweiten Rohres ein verformbares Druckübertragungselement angeordnet ist, um eine auf das zweite Rohr wirkende Vortriebskraft auf das erste Rohr zu übertragen, dadurch gekennzeichnet, dass
a) zwischen dem Druckübertragungselement und dem ersten Rohr eine erste Dichtmasse bereitgestellt oder angebracht wird,
b) das Druckübertragungselement an das erste Rohr angedrückt wird,
c) zwischen dem Druckübertragungselement und dem zweiten Rohr eine zweite Dichtmasse bereitgestellt oder angebracht wird und
d) das zweite Rohr an das Druckübertragungselement gedrückt wird.

## Beschreibung

### Technisches Gebiet

Die Erfindung betrifft ein Verfahren zum Dichten von Fugen beim Pressrohrvortrieb, wobei zwischen einer Stirnseite eines ersten Rohres und einer Stirnseite eines darauf folgenden zweiten Rohres ein elastisch verformbares Druckübertragungselement angeordnet ist, um einen auf das erste Rohr wirkende Vortriebskraft auf das zweite Rohr zu übertragen. Weiter bezieht sich die Erfindung auf ein Pressvortriebsverfahren, auf eine nach diesem Verfahren hergestellte Rohrleitung und auf ein für das Verfahren zum Dichten von Fugen beim Pressrohrvortrieb geeignetes Rohr.

### Stand der Technik

Aus der WO 2005/080753 A1 (Trümpi) ist ein Verfahren für den Pressrohrvortrieb unter Verwendung von hydraulischen Fugen bekannt. Die hydraulische Fuge wird durch einen Schlauch realisiert, der mit einer Flüssigkeit gefüllt ist.

Ein weiteres Pressvortriebsverfahren ist aus der WO 2007/112979 A1 (Baumgartner) bekannt. Der Druckausgleichsring zur Einlage zwischen Rohrstirnflächen hat ein oder mehrere Druckübertragungslamellen aus Elastomermaterial. Die Druckübertragungslamellen haben an ihren für den Kontakt mit den Stirnflächen der Rohre vorgesehenen Kontaktflächen Verstärkungen, die eine Dehnung der Lamelle in der Ebene des Druckausgleichsringes weitgehend verhindern. Die Druckübertragungslamellen können mit einer Press-Klebeschicht versehen sein) und so auf die Stirnseite eines Rohrs aufgeklebt werden. Die "Primärdichtung" wird in konventioneller Weise durch ein separates Element an der Rohraussenseite sichergestellt. Die in Umfangsrichtung umlaufenden ElastomerLamellen sollen den besonderen Vorteil haben, dass sie aufgrund ihrer elastischen Eigenschaften zugleich eine Abdichtung des Muffenspalts bewirken.

Ein ähnliches System zeigt die EP 1,079,064 A2 (Baumgartner). Ein Druckausgleichsring hat eine Vielzahl von radial-, fächer- bzw. strahlenförmig angeordneten ElastomerLamellen. In einer bevorzugten Ausführungsform sind die Druckübertragungselemente werkseitig auf einer Rohrstirnfläche befestigt oder aufgeklebt, so dass das System montagefreundlicher wird. Die Elastomer-Lamellen sollen den besonderen Vorteil haben, dass sie aufgrund ihrer elastischen Eigenschaften zugleich eine Abdichtung des Muffenspalts bewirken.

Die bekannten Systeme haben denn Nachteil, dass die Dichtung gegen Wasser, das von aussen in das Rohr dringt oder von innen aus dem Rohr läuft, nicht befriedigend ist.

Die US 4,432,667 (Richardson) zeigt eine alternative Ausführungsform des Pressvortriebs: Anstatt das mittels einer Presse ganze Rohre auf einmal in den Tunnel geschoben werden, werden die Fugen zwischen den Rohren hier abwechselnd geweitet und zusammengezogen. Durch eine geeignete Steuerung ergibt sich so ein wurmartiger Vortrieb.

### Darstellung der Erfindung

Aufgabe der Erfindung ist es, ein dem eingangs genannten technischen Gebiet zugehörendes Verfahren zu schaffen, welches eine bessere und trotzdem möglichst einfach zu erstellende Dichtung der Fugen ermöglicht.

Die Lösung der Aufgabe ist durch die Merkmale des Anspruchs 1 definiert. Gemäss der Erfindung ist beim Verfahren zum Dichten von Fugen beim Pressrohrvortrieb zwischen einer Stirnseite eines ersten Rohres und einer Stirnseite eines darauf folgenden zweiten Rohres ein verformbares Druckübertragungselement angeordnet. Dieses ist dazu ausgebildet und geeignet, um einen auf das zweite Rohr wirkende Vortriebskraft auf das erste Rohr zu übertragen. Das Verfahren umfasst kurz gesagt folgende Schritte:
a) Zwischen dem Druckübertragungselement und dem ersten Rohr wird eine erste Dichtmasse bereitgestellt oder angebracht.
b) Das Druckübertragungselement wird an das erste Rohr angedrückt.
c) Zwischen dem Druckübertragungselement und dem zweiten Rohr wird eine zweite Dichtmasse bereitgestellt oder angebracht.
d) Das zweite Rohr wird an das Druckübertragungselement gedrückt.

Die Rohre bestehen in aller Regel aus armiertem Beton. Wird ein Elastomer auf die Stirnfläche eines Betonrohrs gepresst, so kann man nicht davon ausgehen, dass diese Kontaktfläche dicht für Flüssigkeiten ist und das selbst bei hohen Anpressdrücken. Der Grund dafür wird darin gesehen, dass der Beton eine Vielzahl von Poren besitzt und folglich eine gewisse Oberflächenrauigkeit hat. Ein Elastomer, welches fest genug ist, den Vorpressdruck zu übertragen, kann sich nicht genügend feinstrukturiert verformen, um sich der Betonoberfläche anzupassen. Es bleiben also feine Kanäle durch die Flüssigkeit dringen kann. Eine sehr grosse Auflagefläche bereitzustellen, mag diesen Effekt reduzieren, ist aber für den Pressvortrieb nicht praktikabel. Mit der Erfindung wird nun ein flüssigkeitsdichter Kontakt zwischen Elstomer und Beton und damit zwischen Druckübertragungselement und Rohr sichergestellt. Das geschieht erfindungsgemäss mit einer plastischen Dichtmasse. Diese soll zu einem ersten Zeitpunkt und unter dem Anpressdruck von zum Beispiel einigen Megapascal (MPa) sich so verformen können, dass sie sich der Oberflächenrauigkeit anpasst und die oben erwähnten feinen Kanäle verschliesst. Da die Dichtmasse nicht vollständig wegfliesst, sondern über eine ausreichend lange Dauer in dem Kontaktbereich von Druckübertragungselement und Rohr bleibt, ist die Abdichtung an der Kontaktfläche zwischen Druckübertragungselement und Rohrstirnfläche sichergestellt.

Die Dichtmasse wird bevorzugt auf das Druckübertragungselement aufgebracht und dann zusammen mit diesem auf das Rohr gepresst. Da die Kontakt- bzw. Auflagefläche des Druckübertragungselements auf der Stirnseite des Rohrs kleiner ist als die Stirnseite des Rohrs, lässt sich so auf eine einfache Art ein präzises und materialsparendes Verfahren realisieren. Alternativ kann die Dichtmasse aber auch auf die entsprechenden Stellen der Stirnseite des Rohres aufgetragen werden oder auch auf die gesamte Stirnseite.

Es ist auch denkbar, dass die Dichtmasse in anderer Weise bereitgestellt wird. Dies kann zum Beispiel dadurch erreicht werden, dass das Druckübertragungselement vorgängig mit einer Dichtungsmasse beschichtet worden ist, so dass die Dichtmasse überall dort bereitgestellt ist, wo sie benötigt wird, nämlich überall dort, wo ein Kontakt zwischen Druckübertragungselement und Stirnfläche des Rohrs entsteht.

Es kann von Vorteil sein, wenn die Rohre bereits werkseitig mit dem Druckübertragungselement und der Dichtmasse versehen und so für das Pressrohrvortriebsverfahren bereitgestellt werden. Es kann sogar das zweite Rohrende mit einer Dichtmasse bereitgestellt werden. Derart vorbereitete Rohre werden dann in den Pressrohrvortriebsschacht hinunter gelassen und vor die Presse gesetzt. Entsprechend sind weniger Vorbereitungsarbeiten auf der Baustelle erforderlich.

Es ist ausserdem vorteilhaft, wenn die Dichtmasse sich unter dem minimalen Anpressdruck gut verteilt. Dadurch wird erreicht, dass schon das Andrücken des Druckübertragungselements an die Rohrstirnfläche eine gute Dichtung ergibt, bevor noch der Pressrohrvortriebsdruck (von z.B. 10 - 100 Megapascal) aufgebracht wird.

Das zweite Rohr wird typischerweise durch die Presse an das Druckübertragungselement angepresst. Das geschieht mit den üblichen Anpressdrücken von einigen Megapascal.

Gemäss einer bevorzugten Ausführungsform ist das Druckübertragungselement ein Schlauch aus einem armierten Elastomer-Material, der mit Flüssigkeit gefüllt ist.

Die Armierung hat den Vorteil, dass sich so mit Elastomeren Schläuche herstellen lassen, die die nötigen Drücke des Pressrohrvortriebsverfahrens ertragen. Die Flüssigkeit im Schlauch stellt eine Gleichverteilung der Vortriebskraft entlang der Rohrstirnseite sicher. Ausserdem wird es damit möglich, den Druck in der Fuge zu überwachen und Überlastungen der Rohre wegen zu hohem Druck der Vortriebspresse zu vermeiden. Insbesondere in Rohrkurven kann der Druck gleichmässig übertragen werden. Armierte Elastomer Schläuche für den Pressvortrieb sind an sich bekannt und werden beispielsweise beim Verfahren gemäss WO 2005/080753 A1 eingesetzt.

Die Flüssigkeit kann jede hinreichend inkompressible Flüssigkeit sein. Wegen der guten Verfügbarkeit, Arbeitssicherheit und Umweltschutz bietet sich Wasser an. Andere Flüssigkeiten wie zum Beispiel Hydraulik Öle sind aber ebenfalls möglich. Auch können dem Wasser Stoffe wie zum Beispiel Frostschutzmittel beigesetzt werden.

Anstelle von Schläuchen können auch Vollprofile aus elastischem Material verwendet werden. So ist es zum Beispiel möglich, auf der Stirnseite des Rohrs ringförmig umlaufende Lamellen einzusetzen, wie sie als solches z.B. aus der WO 2007/112979 A1 (Baumgartner) oder EP 1 079 064 A2 (Baumgartner) bekannt sind.

Gemäss einer besonderen Ausführungsform ist das Rohr an seiner Stirnseite derart ausgebildet, dass in der montierten Position, ein druckübertragender Oberflächenteil des Druckübertragungselements auf einen im Wesentlichen flachen Teil der Stirnseite des Rohrs aufliegt.

Die Kontaktfläche zwischen Druckübertragungselement und Stirnseite des Rohrs kann also entsprechend dem auftretenden Druck variieren, ohne dass eine Kante im Weg sein könnte.

Flache Stirnseiten sind auf der einen Seite einfacher in der Herstellung und ausserdem bilden sich so keine Schwachstellen im Material. Wichtiger ist aber vielleicht, dass sich das Druckübertragungselement ausserhalb einer Nut besser unter dem Druck verformen kann. Auch ist die Installation einfacher, da mehr Spiel in der Positionierung besteht. Schliesslich kann eine zu tiefe Nut dazu führen, dass die Rohre sich unter dem Pressdruck berühren. Das führt in vielen Fällen zum Bruch der Segmente.

Es ist aber durchaus denkbar, dass an der Rohrstirnseite gewisse Strukturen ausgebildet sind, so dass das Druckübertragungselement zuverlässig an der richtigen Stelle positioniert werden kann. Insbesondere kann an der Stirnseite eine Ausnehmung für ein am Druckübertragungselement ausgebildetes Ventil vorgesehen sein.

Gemäss einer besonderen Ausführungsform werden die erste und die zweite Dichtmasse jeweils schnurförmig auf das Druckübertragungselement aufgetragen.

Für die Dichtigkeit der Fuge ist es wichtig, dass es keine Stellen zwischen Druckübertragungselement und Stirnseite des Rohrs gibt, an denen Dichtmasse fehlt oder zu wenig Dichtmasse vorhanden ist, um eine flüssigkeitsdichte Verbindung der beiden Bauteile sicherzustellen. Der Anpressdruck nimmt im Anpressvorgang zunächst an der Kontaktfläche zu und drängt das sich dort befindliche Dichtmittel in die Oberflächenrauheit von Beton und Elastomer sowie zu den Stellen mit geringem Anpressdruck. Das bedeutet, dass sich die Dichtmasse bevorzugt von der Kontaktfläche weg bewegt. Man erwartet daher, dass die Verteilung der Dichtmasse entlang des Druckübertragungselements schwieriger ist, als die Verteilung senkrecht zum Druckübertragungselement. Um eine gleichmässige Verteilung der Dichtmasse entlang des Druckübertragungselements sicher zu stellen ist es daher das einfachste, die Dichtmasse gleichmässig entlang des Druckübertragungselements aufzubringen. Dadurch ergibt sich eine Schnurform. Eine Bandform, also eine Verteilung der Dichtmasse auf dem Druckübertragungselement senkrecht zu seiner Hauptausdehnungsrichtung, ist ebenfalls nur bedingt empfehlenswert, da es dabei dazu kommen kann, das Dichtmasse auf Bereiche aufgetragen wird, in denen Beton und Elastomer nicht mit genügend grossem Druck zusammengepresst werden. Die Dichtmasse in diesen Bereichen kann ihre Aufgabe nicht erfüllen. Trotzdem sollte die aufgetragene Schnur nicht zu schmal sein, sonst kann nicht sichergestellt werden, dass genügend Dichtmasse an der ersten Kontaktfläche vorhanden ist und sich die Dichtmasse möglichst gleichmässig verteilt.

Alternativ kann die Dichtmasse auch als breites Band oder als einzelne Tropfen aufgebracht werden. Es ist auch denkbar, dass das Druckübertragungselement selbst mit der Dichtungsmasse beschichtet ist, so dass die Dichtungsmasse überall dort wirken kann, wo sie benötigt wird. Bei geeigneter Konsistenz kann die Dichtmasse auch aufgesprüht werden.

Gemäss einer besonderen Ausführungsform, wird zum Andrücken des Druckübertragungselements an die Stirnseite des ersten Rohrs, das Druckübertragungselement auf einer 3D-Schablone zurechtgelegt. Danach wird das Druckübertragungselement mit Hilfe der 3D-Schablone an die Stirnseite des ersten Rohrs gedrückt. Dies ist vor allem für die Montage des Druckübertragungselements auf der Baustelle von Vorteil.

Die 3D-Schablone ist eine Montagehilfe. Die 3D-Schablone besteht aus einem Träger der beispielsweise aus Holz oder Metall bestehen kann und der vorzugsweise flach liegen kann. Darauf sind Halteelemente befestigt, die das Druckübertragungselement in der gewünschten Anordnung festhalten. Die Elemente verhindern ein Abrutschen des Druckübertragungselements zu den Seiten der Schablone. Gleichzeitig reichen die Halteelemente aber nicht so weit senkrecht vom Träger weg, dass sie ein Anpressen des Druckübertragungselements an das Rohr behindern oder beim Anpressen zwischen Druckübertragungselement und Rohr geraten können. Vorzugsweise ist die 3D-Schablone aus einem leichten aber formstabilen Material geformt oder erreicht diese Eigenschaften durch ihre Konstruktion. Vorzugsweise liegt das Druckübertragungselement so dicht und durchgehend an der Innenseite der 3D-Schablone an, dass ein gleichmässiges Anpressen des Druckübertragungselements an das Rohr mit der 3D-Schablone möglich ist.

Die Positionierung des Druckübertragungselements ist in der Horizontalen einfacher als in der Vertikalen. Das liegt an dem Eigengewicht und an der Tatsache, dass das Druckübertragungselement auf einer 3D- Schablone stabil liegt, während es an der, typischerweise senkrechten, Stirnseite eines Rohres befestigt werden muss. Selbst wenn das Rohr aufgestellt wird, so dass die Stirnseite horizontal liegt, so ist die Montage komplizierter. Zum einen muss die Höhe des Rohrs überwunden werden und zum anderen lässt sich das Dichtmittel nur schwer gleichmässig aufbringen wenn dies im gleichen Arbeitsschritt wie die Positionierung des Druckübertragungselements s geschieht. Liegt das Druckübertragungselement hingegen auf einer 3D- Schablone, so lässt sich das Dichtmittel in einem zweiten Schritt, nach der erfolgten Positionierung auftragen. Damit ist ein präziseres Arbeiten möglich.

Indem das Druckübertragungselement noch mit der 3D- Schablone angepresst wird, verhindert man ein Verschieben. Ausserdem lässt sich auf diese Weise ein gleichmässigerer Druck auf das Druckübertragungselement und damit das Dichtmittel ausüben.

Es ist aber auch denkbar, dass das Rohr vertikal ausgerichtet ist, wenn das Druckübertragungselement an der Rohrstirnseite angebracht wird. Dies kann bei einer werkseitigen Montage den Befestigungsprozess beschleunigen.

Bevorzugt ist die erste Dichtmasse ein pastöses Material mit Initialhaftung. Damit wird das Druckübertragungselement am ersten Rohr provisorisch befestigt. Auch die zweite Dichtmasse kann in dieser Weise ausgebildet sein.

Ein pastöses Material eignet sich als Dichtmasse, da es die Bedingungen an Fliessfähigkeit und Beeinflussung durch Druck erfüllen kann. Falls die Dichtmasse zusätzlich eine Initialhaftung aufweist die gross genug ist, um das Druckübertragungselement in der gewünschten Position am Rohr zu befestigen, so erleichtert dies die Montage. Es werden dann keine weiteren Halter an dem Rohr benötigt und der Einsatz einer oben beschriebenen 3D- Schablone zur Druckübertragungselementmontage wird vereinfacht, da es keine Zugänge zu Haltern geben muss und keine Halter geschlossen werden müssen. Je nach Montage und Art der Halter könnte sich ansonsten das Problem ergeben, dass dadurch neue Spalten zwischen dem Druckübertragungselement und dem Rohr entstehen.

Die Dichtmasse kann zum Beispiel ein feuchtigkeitsvernetzender Kleber sein. Die Initialhaftung liegt zum Beispiel bei mindestens 10 g/cm².

Vorteilhafterweise hat der Schlauch, der als Druckübertragungselement dient, im unbelasteten Zustand einen runden Querschnitt.

Der runde Querschnitt ist symmetrisch um die Längsachse. Dadurch sind solche Schläuche unempfindlich gegenüber Verdrehen, wenn es entlang des ganzen Schlauches passiert und weniger empfindlich als andere Querschnitte gegen Torsion. Es gibt eine klar definierte und einfach zu erkennende erste Kontaktfläche auf die das Dichtmittel aufgetragen werden sollte. Der Druck, der auf den Schlauch im Einsatz wirkt, wird gleichmässig verteilt. Auch ist die Verformung unter Druck von innen einfach abzuschätzen.

Alternativ sind andere Formen denkbar, wie zum Beispiel oval, tonnenförmig oder rechteckig. Dasselbe kann auch für Druckübertragungselemente (Lamellen) mit einem Vollquerschnitt gesagt werden.

Gemäss einer besonderen Ausführungsform wird das Druckübertragungselement in Spiralform auf die Stirnseite der Rohre aufgebracht. Gemäss einer anderen besonderen Ausführungsform wird das Druckübertragungselement in Ringform auf der Stirnseite der Rohre aufgebracht. Das heisst, die Kontaktfläche zwischen Druckübertragungselement und Rohr verläuft in Umfangsrichtung und nicht in Radialrichtung.

Die Druckübertragung sollte über eine möglichst grosse Fläche geschehen, da so die lokalen Drücke und damit die Belastungen der Druckübertragungselemente kleiner gehalten werden können. Um von der dichten Verbindung zwischen Druckübertragungselement und Rohr profitieren zu können, sollte das Druckübertragungselement in tangentialer Richtung durchgehend verlaufen und keine Unterbrüche bilden. Dies ergibt folgende Varianten: ein kreisförmig (geschlossener) oder ein spiralförmiger Verlauf. Ein einzelner Kreis ist zwar in sich geschlossen und damit dichter als eine Spirale, aber er bietet nur eine relativ kleine Auflagefläche. Mehrere konzentrische Kreise bilden eine grössere Auflagefläche. Um diese Anordnung zu realisieren muss man entweder auf nicht kontrollierte Druckübertragungselemente zurückgreifen oder aber Kreisschläuche mit Verbindungen untereinander benutzen. Letztere sind kompliziert herzustellen, da die Verbindungen möglichst flach sein müssen in Richtung der Rohrlängsachse, damit auch Rohrleitungen mit Kurven erstellt werden können. Eine Spirale hingegen vereint die grössere Auflagefläche mit einem einfachen und kontrollierbaren Aufbau. Es müssen keine Verbindungen in den Schlauch eingefügt werden, sondern lediglich die Enden geeignet verschlossen werden (z.B. mit einem Ventil). Bei einem spiralförmigen Verlauf ist es von Vorteil, wenn das Druckübertragungselement mindestens eineinhalb, insbesondere zwei oder mehr vollständige Umläufe auf der Rohrstirnseite bildet.

Gemäss einer besonderen Ausführungsform wird als erste und zweite Dichtmasse ein Silan Modifiziertes Polymer (SM-Polymer) verwendet.

Silan Modifizierte Polymere eignen sich sowohl als Dichtmittel als auch als Klebstoffe. Sie können eine hohe Anfangsfestigkeit haben und brauchen keine hohen Anpressdrucke. Das erleichtert die Montage des Druckübertragungselements an dem ersten Rohr. Die ausgehärtete Masse kann eine hohe Beweglichkeit aufweisen, was günstig ist, da sich die Druckübertragungselemente auch im fertig verbauten Zustand noch bewegen können und dies unter Erschütterungen auch tun. Zudem brauchen viele Produkte auf der Basis von Silan modifizierten Polymeren keine Grundierung oder Primer. Auch das vereinfacht die Montage.

Die Shore-A-Härte der Dichtmasse liegt zum Beispiel bei über 50 bei 20°C und der E-Modul bei mindestens 1 MPa (DIN 53504).

Es ist auch möglich, für die erste und die zweite Dichtmasse verschiedene Materialien einzusetzen.

Anspruch 11: PfropfenWenn das Druckübertragungselement spiralförmig angeordnet ist und mehr als einen Umlauf um die Rohrachse macht, so bildet sich ein Hohlraum zwischen den spiralförmig benachbarten Abschnitten des Druckübertragungselements. Gemäss einer besonderen Ausführungsform wird genügend Dichtemittel in einen Teil dieses Hohlraums eingespritzt, um einen Pfropfen zu bilden. Der in Umfangrichtung verlaufende Kanal der Spirale wird damit geschlossen.

Diese Ausführungsform ist nur dann sinnvoll und möglich, wenn das Druckübertragungselement in Spiralform angeordnet ist. Trotz einer dichten Verbindung zwischen Druckübertragungselement und Rohr kann es dazu kommen, dass die Fuge nicht flüssigkeitsdicht ist, weil sich die Flüssigkeit dadurch entlang der Spirale bewegen kann. Um dies zu verhindern kann an einem Tiefpunkt der, in der Rohrleitung aufrecht stehenden Spirale des Druckübertragungselements, ein Pfropfen aus zusätzlichem Dichtmittel angebracht werden. Dies geschieht, in dem über einen Schlauch geeigneter Länge eine ausreichende Menge Dichtmittel zwischen zwei Umläufe des Druckübertragungselements gespritzt wird. Man bringt den Pfropfen zum Beispiel am tiefsten Punkt an, da dort das Dichtmittel, gravitationsbedingt, vor dem Aushärten nicht wegfliesst, sondern sich gleichmässig verteilt. Bevorzugt wird der Pfropfen im, vom Rohrinneren gesehen, ersten Tiefpunkt zwischen zwei Umläufen des Druckübertragungselements angebracht. Es ist aber auch möglich der Spirale weiter nach aussen zu folgen und in eventuell vorkommenden späteren Tiefpunkten den Pfropfen zu installieren.

Durch einen solchen Pfropfen wird eine allfällige ein- oder ausdringende Flüssigkeit auch in Richtung der Spirale aufgehalten. Damit ist die Fuge, auch gegenüber grösseren Mengen von Flüssigkeit und Diffusion, dicht.

Die Erfindung bezieht sich ausserdem auf ein Pressrohrvortriebsverfahren zum Erstellen einer Rohrleitung. Dabei wird mindestens ein erstes Rohr durch Vortrieb eines zweiten Rohrs vorwärtsgetrieben und die Fugen werden gemäss dem oben beschriebenen Verfahren installiert und abgedichtet.

Pressrohrverfahren ermöglichen es Rohre zu verlegen ohne dafür den Boden zu öffnen. Das hat insbesondere in bebauten Gebieten grosse Vorteile wo viele Projekte sonst nicht realisierbar wären.

In vielen Fällen wünscht man sich ein Rohr, welches dicht ist gegenüber Flüssigkeiten. Das kann zum Beispiel der Fall sein wenn mit dem Rohr Abwässer transportiert werden. Bei anderen Rohren können von aussen eindringende Flüssigkeiten Korrosionsschäden verursachen oder aus anderen Gründen unerwünscht sein.

Das hier beschriebene Pressrohrvortriebsverfahren hat den Vorteil, dass die hydraulischen Fugen einfach und materialsparend abgedichtete werden. Eine Verbesserung der Dichtung durch einen zusätzlichen Pfropfen lässt sich unkompliziert und schnell durchführen. Nur ein Minimum an Verbrauchsmaterial ist nötig.

Die erfindungsgemässe Rohrleitung besteht aus mindestens einem ersten Rohr mit einer ersten Stirnseite und einem darauf folgenden zweiten Rohr mit einer zweiten Stirnseite. Zwischen dem ersten und dem zweiten Rohr ist ein elastisch verformbares Druckübertragungselement. Die auf das erste Rohr wirkende Vortriebskraft wird so auf das zweite Rohr zu übertragen. Das Rohr zeichnet sich dadurch aus, dass zwischen den beiden Seiten des Druckübertragungselements und den jeweils anschliessenden Rohren jeweils eine Dichtmasse ist.

Eine solche Rohrleitung ist je nach Ausführung flüssigkeitsdicht oder für kleinere Mengen flüssigkeitsdicht und einfach für beliebige Mengen an Flüssigkeit abzudichten. Mit beliebigen Mengen sind hier solche gemeint, die unter normalen Druckverhältnissen zustande kommen. Die Dichtungen sind nicht für Hochdruck- oder Tiefseeleitungen konzipiert.

Es kann von Vorteil sein, wenn die erfindungsgemässen Verfahren fertig vorbereitete Rohre mit Druckübertragungselement verwenden. Bei einem solchen Rohr mit einem verformbaren Druckübertragungselement an einer Stirnseite des Rohrs ist zwischen der genannten Stirnseite und dem Druckübertragungselement eine Dichtmasse angebracht ist. Vorzugsweise ist das Druckübertragungselement ein Schlauch aus einem armierten Elastomer-Material.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: konventioneller Aufbau eines Tunnels der mit Pressvortrieb gebaut wird
- Fig.2a-d: Längsschnitt durch das Ende eines Rohrs (1a) und den Druckübertragungselement (2).
- Fig. 3: Aufsicht auf das Rohrende (1a) mit dem spiralförmig angebrachten Druckübertragungselement (2).
- Fig. 4: Querschnitt durch eine hydraulische Fuge, die teilweise verfüllt wurde, (10) um das Rohr gegen Flüssigkeiten die entlang des spiralförmig angebrachten Druckübertragungselements (2) und damit entlang der Dichtung laufen, abzudichten.
- Fig. 5: Aufsicht auf das Rohrende (1a) mit dem ringförmig angebrachten Druckschlauch (2).
- Fig. 6: Querschnitt durch das Rohr (104.n) mit dem angebrachten Druckschlauch (2) und Dichtmasse (3a) am Ende und Dichtmasse (3b) am Anfang.

Grundsätzlich sind in den Figuren gleiche Teile mit gleichen Bezugszeichen versehen.

### Wege zur Ausführung der Erfindung

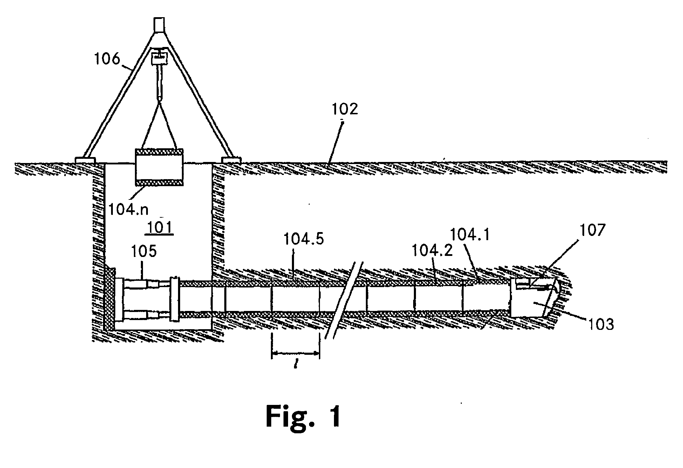

Figur 1 zeigt, wie eine Rohrleitung 104 im Untertagebau durch Pressrohrvortrieb erstellt werden kann. Ausgehend von einem Schacht 101 wird in einer gewünschten Tiefe unter der Geländeoberfläche 102 ein Tunnel 103 gebohrt und eine Rohrleitung 104 aus mehreren Rohren 104.1, 104.2, ... vorgetrieben. Der Tunnel 103 wird mit einer Tunnelbohrmaschine 107 am vorderen Ende der Rohrleitung 104 ausgebrochen. Im Schacht 101 ist eine Presse 105 platziert, welche die gesamte Rohrleitung 104 vom hinteren Ende her nach vorne voran schiebt. Die einzelnen Rohre 104.n werden mit einer Hebevorrichtung 106 in den Schacht 101 abgesenkt, an die hintere Stirnseite 1a des letzten Rohrs positioniert (unter Zwischenschaltung eines Druckübertragungselements 2) und dann mit der Presse 105 um die Länge L eines Rohrs vorgetrieben. Danach wird die Presse 105 zurückgezogen und das nächste Rohr (mit einem nächsten Druckübertragungselement zusammen) eingefügt und mit der Presse 105 vorgetrieben.

Zwischen den aufeinander folgenden Rohren 1041.n ist als Druckübertragungselement 2 vorzugsweise ein mit Flüssigkeit gefüllter Schlauch vorgesehen. Man spricht bei dieser Ausführungsform von einer hydraulischen Fuge. Diese hat den Vorteil, dass die Presskraft relativ gleichmässig auf den gesamten Umfang des Rohrs 104.n verteilt wird. Da der Tunnel 103 und folglich die Rohrleitung 104 in der Praxis häufig Kurven aufweisen, ist es wichtig, dass auch in den Kurven die Presskraft möglichst gleichmässig auf den Rohrumfang verteilt wird. Die Kurven bringen mit sich, dass sich auch die einzelnen Fugen während des Vortriebs verändern. Auf der Kurveninnenseite wird die Fuge kleiner, während sie sich an der Kurvenaussenseite vergrössert.

Die Erfindung bezieht sich auf eine einfach zu realisierende Möglichkeit, die Fugen gegen Flüssigkeit abzudichten.

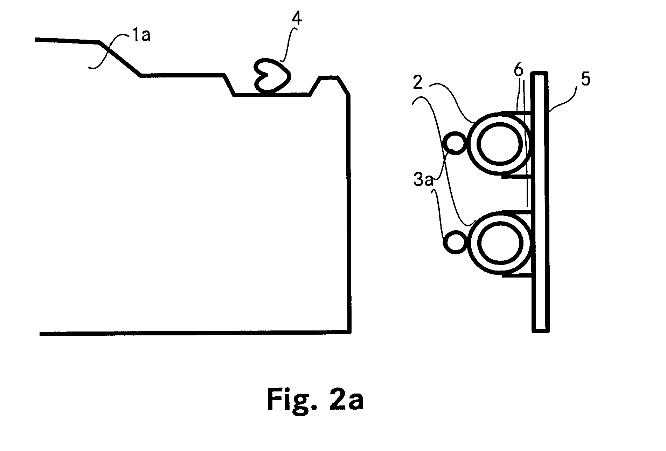

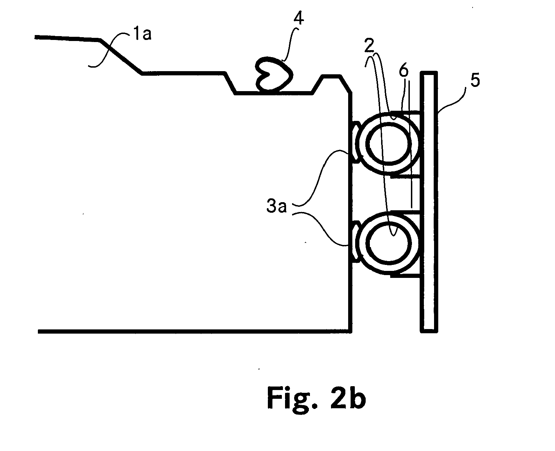

Fig. 2a bis 2d veranschaulichen das bevorzugte Verfahren zum Dichten einer hydraulischen Fuge.

Um das Druckübertragungselement 2 auf der Stirnseite des Rohrendes 1a zu montieren, wird dieses zunächst auf eine 3D- Schablone 5 (zum Beispiel ein brettartiger Montagering mit einem Durchmesser, der dem Durchmesser des Rohrs entspricht) gelegt und mit Positionshaltern 6 gegen seitliches Abrutschen gesichert. Diese Vorbereitungsarbeit kann direkt auf der Baustelle gemacht werden, wobei dann die 3D- Schablone flach auf dem Boden liegt und der Schlauch einfach in die Positionshalter 6 gelegt werden kann. Im vorliegenden Beispiel hat der Schlauch eine Länge, die etwa dem doppelten Umfang des Rohrs entspricht. Folglich kann der Schlauch spiralförmig in die 3D- Schablone 5 gelegt werden.

Gemäss Fig. 2a wird dann eine ausreichende Menge einer geeigneten verformbaren Dichtmasse 3a entlang des gesamten Druckübertragungselements 2 aufgebracht. Die Dichtmasse 3a ist z.B. pastös und wird als Schnur auf den für den Kontakt mit der Stirnseite des Rohrs 1 a vorgesehenen Bereich des Schlauchs aufgetragen.

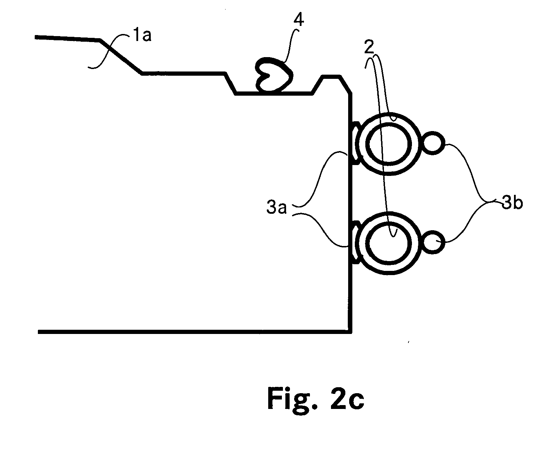

Danach wird gemäss Fig. 2c die 3D- Schablone 5 zusammen mit dem darauf liegenden Druckübertragungselement 2 in die Vertikale gebracht und mit dem Druckübertragungselement 2 voran gegen die Stirnseite des Rohrs 1a gedrückt. Die Dichtmasse 3a wird zwischen Druckübertragungselement 2 und Rohr 1 a verquetscht und verteilt sich dabei so, dass eine flüssigkeitsdichte Verbindung zwischen dem Beton und dem Druckübertragungselement 2 zustande kommt.

Sobald das Druckübertragungselement 2 am Rohr 1a befestigt ist, entweder durch kleben, mit mechanischen Hilfsmitteln oder auf eine andere Art, wird die 3D- Schablone 5 zurückgezogen. Da die Positionshalter 6 zum Druckübertragungselement 2 hin offen sind, behindern sie zu keiner Zeit den Kontakt zwischen Rohr 1 a und Druckübertragungselement 2. Es gibt also einen stirnseitig umlaufenden Kontakt und es bleiben an keiner Stelle Lücken, durch welche Flüssigkeit zwischen dem Rohr 1a und dem Druckübertragungselement 2 hindurch gelangen könnte.

Die Montage vom Druckübertragungselement 2 an das Rohrende 1a kann entweder in einer Vorbereitungsphase (zum Beispiel werkseitig, also vor dem Transport auf die Baustelle) erfolgen oder aber direkt auf der Baustelle.

Wie Fig. 2c zeigt, wird nun auf die Seite des Druckübertragungselements 2, die frei steht und die das hintere Ende der Rohrleitung 104 kontaktieren wird, eine ausreichend dicke, durchgehende Schnur der Dichtmasse 3b aufgetragen. Es muss hier genügend Dichtmasse 3b zur Verfügung gestellt werden, um zwischen dem Druckübertragungselement 2 und der hinteren Stirnseite eines zweiten Rohrs 2a einen flüssigkeitsdichten Kontakt zu schaffen.

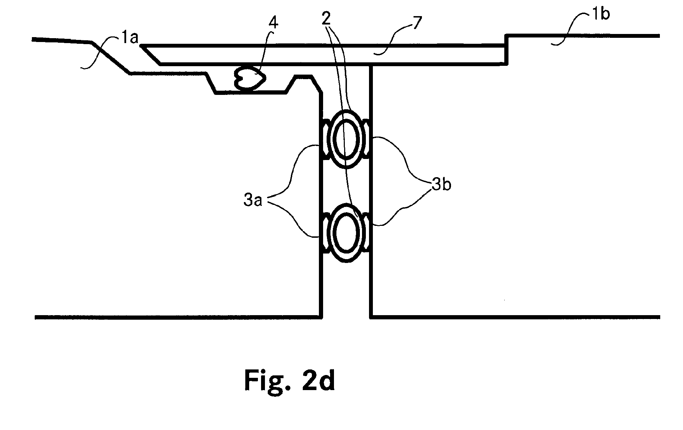

Schliesslich wird das Rohr in den Schacht 101 hinunter gelassen und - wie Fig. 2d veranschaulicht - an das hinterste Rohr 104.n der schon verlegten Rohrleitung 104 angepresst. Das Druckübertagungselement 2 mit der aufgetragenen Dichtungsmasse 3b befindet sich jetzt in der Fuge zwischen den beiden Rohren 1 a und 1b. Durch den Anpressdruck wird die Dichtmasse 3b zwischen dem Rohranfang 1b und dem Druckübertragungselement 2 verteilt. Auch auf dieser Seite des Druckübertragungselements 2 entsteht damit eine flüssigkeitsdichte Verbindung. Beim Vortrieb wird der Schlauch im Querschnitt verformt. Weil sich der Fugenspalt z.B. beim Eintritt in eine Kurve der Rohrverlegungslinie verändert, verformt sich auch der Druckübertragungsschlauch. Die erfindungsgemässe Art der Dichtung zeichnet sich dadurch aus, dass sie auch bei derartigen Formveränderungen ihre Wirkung beibehält.

Im Folgenden werden noch weitere konstruktive Einzelheiten im Bereich der Fuge beschrieben.

An dem Rohranfang ist eine Manschette 7, vorzugsweise aus Metall, angebracht. Diese Manschette 7 schiebt sich über das Rohrende 1a des vorhergehenden Rohres 104.n und schützt die Fuge vor grober Verschmutzung. Damit kein Erdreich in die Fuge eindringen kann, liegt eine Primärdichtung 4 zwischen der Manschette 7 und dem Rohrende 1a.

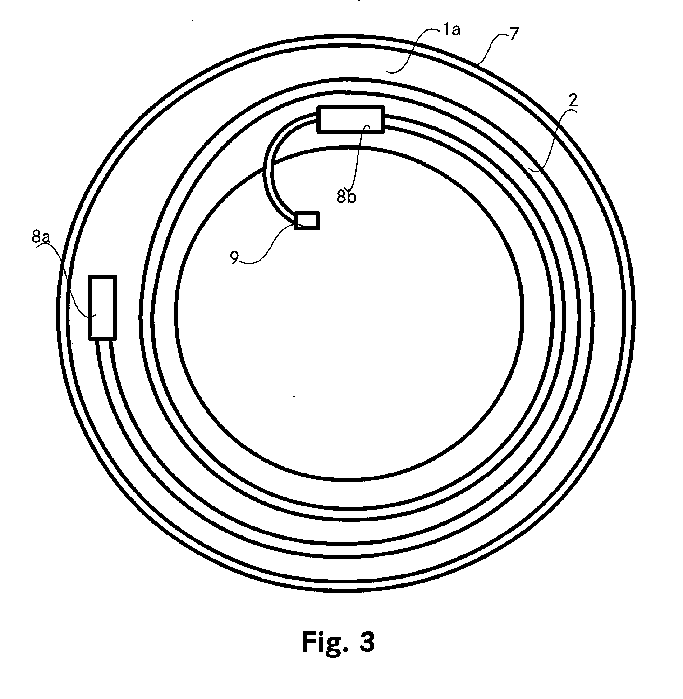

Figur 3 zeigt eine mögliche Ausführungsform eines Druckübertragungselementes 2 und zwar in Form eines geeigneten Schlauches der in Spiralform auf das Roh 1a montiert wird. Der Schlauch ist auf der flachen Stirnseite des Rohrs 1 a angebracht (z.B. festgeklebt oder mit mechanischen Mitteln fixiert). Der Schlauch kann während des Vortriebs mit variablen Mengen einer inkompressiblen Flüssigkeit gefüllt werden und zwar über das Einfüllventil 9 welches in das Rohr ragt. Dadurch kann die Druckübertragung optimal gesteuert werden. In der bevorzugten Variante wird hingegen eine feste Menge Flüssigkeit eingefüllt und ihr Druck während des Pressvortriebs beobachtet.

Der Schlauch ist auf der eine Seite mit dem Abschlussstück 8a verschlossen. Der Übergang 8b verbindet das eigentliche Druckübertragungselement 2 mit einem Einfüllschlauch und einem Druckmesser 9.

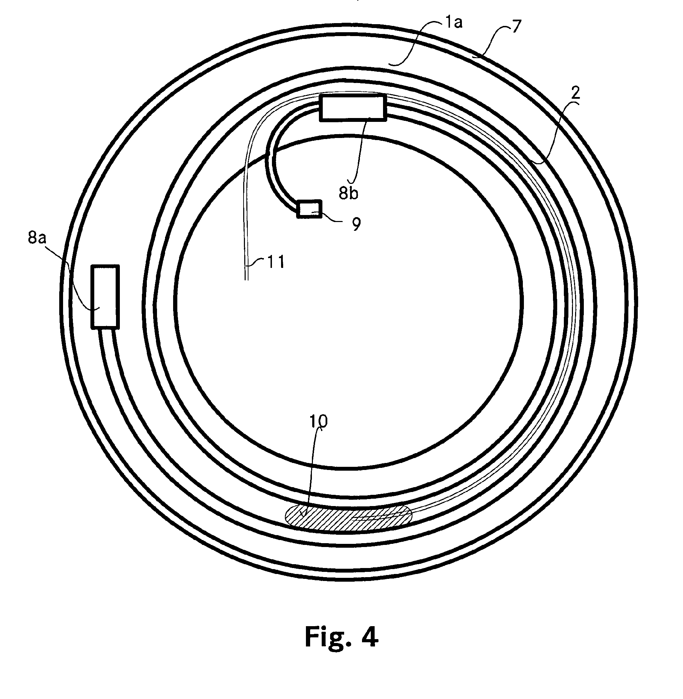

In Figur 4 wird gezeigt wie eine Fuge mit spiralförmigem Schlauch noch besser abgedichtet werden kann. Wird ein spiralförmiger Schlauch als Druckübertragungselement 2 verwendet, so können Flüssigkeiten zwar, dank der Dichtmasse 3a und 3b, nicht zwischen Schlauch und Rohr (1a und 1 b) hindurch fliessen. Aber es ist sehr wohl möglich, dass sie dem Schlauchverlauf in seiner Spiralform folgt. Soll auch dieses Risiko ausgeschlossen werden, kann ein kurzes Stück zwischen den Windungen der Schlauchspirale mit einer Dichtungsmasse verfüllt werden 10. Dies ist ohne zusätzliche Bohrung oder ähnliches möglich. Es wird einfach ein Verfüllschlauch 11 in den Zwischenraum zwischen den Windungen des spiralförmigen Druckübertragungselements 2 geschoben und zwar bis zu der gewünschten Stelle. Die bevorzugte Stelle für diesen Dichtmittelpfropfen 10 ist am tiefsten Punkt zwischen den beiden (vom Rohrinneren gesehen) innersten Windungen des Druckübertragungselements 2.

Alternativ zu dem spiralförmigen Schlauch können auch ein oder mehrere in sich geschlossene, im Kreis angeordnete Schläuche als Druckübertragungselement 2 genutzt werden.

Bevorzugt werden runde Schläuche aus armierten Elastomer benutzt.

Im Fall eines in sich geschlossenen Druckübertragungselements 2 (z.B. eines Rings) ist ein Verfüllen 10 mit Dichtmasse natürlich weder nötig noch in sinnvoller Weise möglich.

In einer bevorzugten Ausführung dient die Dichtmasse 3a und 3b gleichzeitig als Klebstoff mit dem das Druckübertragungselement 2 an dem Rohrende 1 a fixiert werden kann. Damit vereinfacht sich die Montage.

In einer weiteren bevorzugten Ausführung basiert die Dichtmasse 3a und 3b auf Silan Modifizierten Polymeren. Die Shore-A-Härte sollte bei 20°C zwischen 50 und 70 liegen. Ein E-Modul in der Grössenordnung von 1 bis 4 MPa ist erwünscht.

In der bevorzugten Ausführung ist die Stirnseite der Rohre 1 a und 1 b im Wesentlichen flach, so dass das Druckübertragungselement 2 nicht in einer vorgeformten Ausnehmung liegt. In alternativen Ausführungen sind allerdings auch Ausnehmungen möglich solange die Druckübertragungsfunktion nicht eingeschränkt wird.

Auch ist die Benutzung einer 3D-Schablone 5 nur eine bevorzugte Ausführung. Es ist auch möglich ein Gestell zu benutzen, auf welchem das Druckübertragungselement 2 aufgelegt wird. Ebenso kann das Druckübertragungselement 2 direkt und ohne Montagehilfe an dem Rohrende 1a befestigt werden.

In einer alternativen Ausführungsform ist es ausserdem möglich, das Druckübertragungselement 2 zunächst an dem Rohranfang 1b aufzubringen und dann zusammen mit dem Rohr 104.n gegen das Rohrende 1a des letzten, schon positionierten Rohrs 104.n, zu pressen.

Als Alternative zu einem Schlauch als Druckübertragungselement 2 ist es auch möglich solide Elastomerlamellen oder Ringe, Lamellen und ähnliches aus anderen verformbaren, haltbaren Materialien zu benutzen.

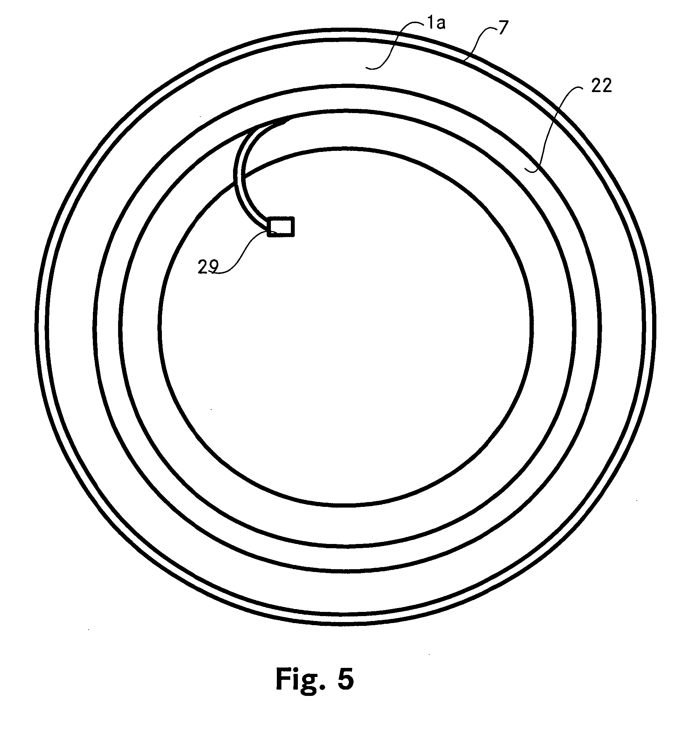

Figur 5 zeigt eine zweite mögliche Ausführungsform eines Druckübertragungselementes 22 und zwar in Form eines geeigneten Schlauches der in Ringform auf das Rohr 1a montiert wird. Der Schlauch ist auf der flachen Stirnseite des Rohrs 1a angebracht (z.B. festgeklebt oder mit mechanischen Mitteln fixiert). Der Schlauch kann während des Vortriebs mit variablen Mengen einer inkompressiblen Flüssigkeit gefüllt werden und zwar über das Einfüllventil 29 welches in das Rohr ragt. Dadurch kann die Druckübertragung optimal gesteuert werden. In der bevorzugten Variante wird hingegen eine feste Menge Flüssigkeit eingefüllt und ihr Druck während des Pressvortriebs beobachtet.

Das Einfüllventil 29 kann auch der Druckmessung dienen.

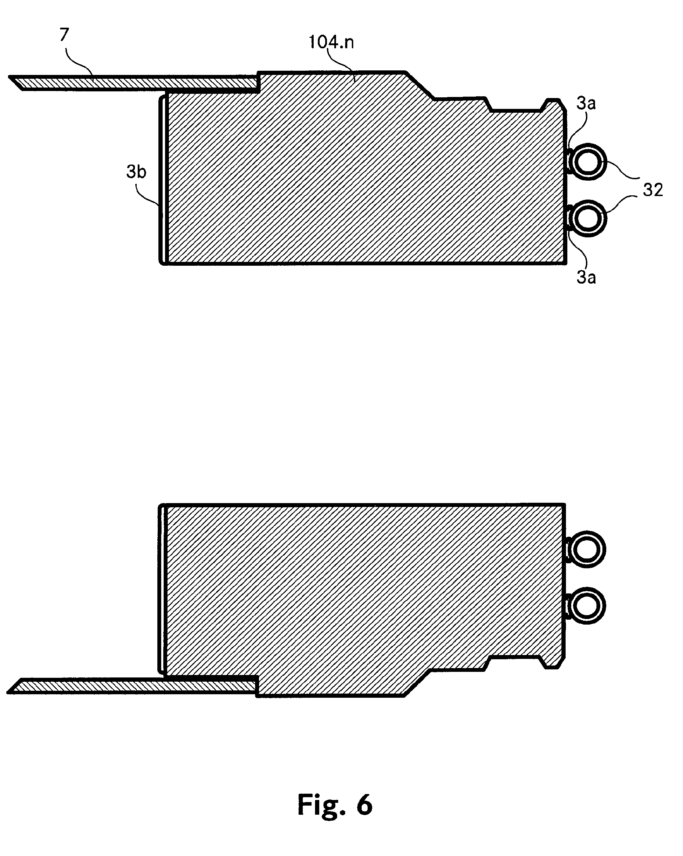

Figur 6 zeigt einen Längsquerschnitt durch ein Rohr 104.n. Am Anfang vom Rohr 104.n ist aussen die Manschette 7 angebraucht. Auf der Stirnseite am Anfang des Rohres 104.n ist die Dichtmasse 3b an der für den Kontakt mit dem Druckübertragungselement des nächsten Rohres geeigneten Stelle schnurförmig, bandartig oder flächig aufgetragen und zwar genügend dick um beim Anpressen eine Dichtung zwischen den Rohr 104.n und dem Druckübertragungselement 32 für Flüssigkeiten zu bilden. Am Ende des Rohrs 104.n ist schon das Druckübertragungselement 32 montiert und zwar mit einer Dichtmasse 3a zwischen dem Druckübertragungselement 32 und dem Rohr 104n.

In Figur 6 ist das Druckübertragungselement 32 in der Form eines spiralförmig angeordneten Schlauches skizziert. Das ist aber nur ein Beispiel. Diese Montageform eignet sich ebenfalls für solide Druckübertragungselement 2 und auch für kreisförmig angeordnete Schläuche.

## Patentansprüche

1. Verfahren zum Dichten von Fugen beim Pressrohrvortrieb, wobei zwischen einer Stirnseite eines ersten Rohres und einer Stirnseite eines darauf folgenden zweiten Rohres ein verformbares Druckübertragungselement angeordnet ist, um einen auf das zweite Rohr wirkende Vortriebskraft auf das erste Rohr zu übertragen, **dadurch gekennzeichnet, dass**
a) zwischen dem Druckübertragungselement und dem ersten Rohr eine erste Dichtmasse bereitgestellt oder angebracht wird,
b) das Druckübertragungselement an das erste Rohrangedrückt wird,
c) zwischen dem Druckübertragungselement und dem zweiten Rohr eine zweite Dichtmasse bereitgestellt oder angebracht wird und
d) das zweite Rohr an das Druckübertragungselement gedrückt wird.

2. Verfahren nach Anspruch 1, **dadurch gekennzeichnet, dass** als Druckübertragungselement ein Schlauch aus einem armierten Elastomer-Material verwendet wird, der mit Flüssigkeit gefüllt ist.

3. Verfahren nach Anspruch 1 oder 2, **dadurch gekennzeichnet, dass** das Rohr an seinen Stirnseiten derart ausgebildet ist, dass in der montierten Position, ein druckübertragender Oberflächenteil des Druckübertragungselements auf einen im Wesentlichen flachen Teil der Stirnseite des Rohrs aufliegt.

4. Verfahren nach einem der Ansprüche 1 bis 3, **dadurch gekennzeichnet, dass** die erste und die zweite Dichtmasse jeweils schnurförmig auf das Druckübertragungselement aufgetragen werden.

5. Verfahren nach einem der Ansprüche 1 bis 4, **dadurch gekennzeichnet, dass** zum Andrücken des Druckübertragungselements auf die Stirnseite des ersten Rohrs das Druckübertragungselement auf einer 3D-Schablone zurechtgelegt wird und danach das Druckübertragungselement mit Hilfe der 3D-Schablone an die Stirnseite des ersten Rohrs gedrückt wird.

6. Verfahren nach einem der Ansprüche 1 bis 5, **dadurch gekennzeichnet, dass** als erste Dichtmasse ein pastöses Material mit Initialhaftung verwendet wird, um das Druckübertragungselement am ersten Rohr provisorisch zu befestigen.

7. Verfahren nach einem der Ansprüche 2 bis 6, **dadurch gekennzeichnet, dass** der Schlauch im unbelasteten Zustand einen runden Querschnitt hat.

8. Verfahren nach einem der Ansprüche 1 bis 7, **dadurch gekennzeichnet, dass** das Druckübertragungselement in Spiralform auf die Stirnseite der Rohre aufgebracht wird.

9. Verfahren nach einem der Ansprüche 1 bis 7, **dadurch gekennzeichnet, dass** das Druckübertragungselement in Ringform auf die Stirnseite der Rohre aufgebracht wird.

10. Verfahren nach einem der Ansprüche 1 bis 9, **dadurch gekennzeichnet, dass** als erste und zweite Dichtmasse ein Silan Modifiziertes Polymer verwendet wird.

11. Verfahren nach einem der Ansprüche 8 oder 10, **dadurch gekennzeichnet, dass** in einen in Rohrumfangsrichtung verlaufenden Hohlraum, der durch mehr als einen Umlauf des Druckübertragungselements zwischen spiralförmig benachbarten Abschnitten des Druckübertragungselements gebildet wird, zusätzlich ein Dichtungsmaterial eingespritzt wird zur Bildung eines Pfropfens.

12. Pressrohrvortriebsverfahren zum Erstellen einer Rohrleitung, wobei mindestens ein erstes Rohr durch Vortrieb eines zweiten Rohrs vorwärtsgetrieben wird, **dadurch gekennzeichnet, dass** das Verfahren zum Dichten von Fugen gemäss einem der Ansprüche 1 bis 11 durchgeführt wird.

13. Rohrleitung mit mindestens einem ersten Rohr mit einer ersten Stirnseite und einem darauf folgenden zweiten Rohr mit einer zweiten Stirnseite, wobei zwischen dem ersten und dem zweiten Rohr ein elastisch verformbares Druckübertragungselement (2) angeordnet ist, um eine auf das zweite Rohr wirkende Vortriebskraft auf das erste Rohr zu übertragen, **dadurch gekennzeichnet, dass**
a) zwischen dem Druckübertragungselement und dem ersten Rohr eine erste Dichtmasse und
b) zwischen dem Druckübertragungselement und dem zweiten Rohr eine zweite Dichtmasse vorhanden ist.

14. Rohrleitung nach Anspruch 13, **dadurch gekennzeichnet, dass** die erste und zweite Dichtmasse ein Silan Modifiziertes Polymer ist.

15. Rohr mit einem verformbaren Druckübertragungselement an einer Stirnseite des Rohrs, **dadurch gekennzeichnet, dass** zwischen der genannten Stirnseite und dem Druckübertragungselement eine Dichtmasse angebracht ist.

16. Rohr nach Anspruch 15, **dadurch gekennzeichnet, dass** das Druckübertragungselement ein Schlauch aus einem armierten Elastomer-Material ist.
